(19) Europäisches Patentamt
European Patent Office
Office européen des brevets

(11) Publication number: **0 356 041 A2**

# (12) EUROPEAN PATENT APPLICATION

(21) Application number: 89307868.3

(22) Date of filing: 02.08.89

(51) Int. Cl.4: G02F 1/35 , B05D 1/20

(30) Priority: 16.08.88 GB 8819414

(43) Date of publication of application: 28.02.90 Bulletin 90/09

(84) Designated Contracting States: AT BE CH DE ES FR GB GR IT LI LU NL SE

(71) Applicant: IMPERIAL CHEMICAL INDUSTRIES PLC
Imperial Chemical House Millbank
London SW1P 3JF(GB)

(72) Inventor: Allen, Simon
8 Madison Avenue
Cheadle Hulme Cheshire SK8 5DF(GB)

(74) Representative: Draggett, Peter Thornton et al
Imperial Chemical Industries PLC P.O. Box 6
Bessemer Road
Welwyn Garden City Herts AL7 1HD(GB)

## (54) Non-linear optical element.

(57) Optical element having non-linear optical (NLO) activity comprising a substrate coated with alternating monolayer of two anilinyl polyene compounds, one having a long-chain alkyl group attached to the anilinyl component and a carboxylate group attached to the polyene component and the other having a long chain alkyl carboxylate group attached to the polyene component an optical device comprising the element, a preparative process for the element and the second compound.

Fig.1.

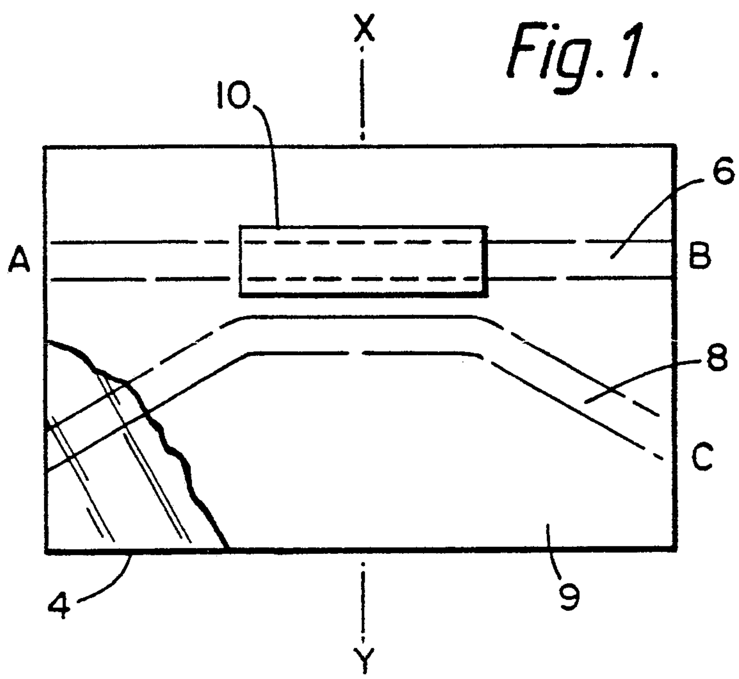


EP 0 356 041 A2

## NON-LINEAR OPTICAL ELEMENT

This specification describes an invention relating to an optical element having non-linear optical (NLO) properties comprising alternating monomolecular layers of two related compounds.

According to the present invention there is provided an optical element having non-linear optical properties (hereinafter called the "NLO element") comprising a transparent or reflecting substrate having at least a partial superficial coating (hereinafter called the "NLO coating") comprising alternating monolayers of two compounds, a "first NLO compound" of the formula:

$$R^1-D^1-Ph-CR^2=CR^3(-CR^4=CR^5)_n-CR^6=C\begin{matrix}A^1\\ A^2\end{matrix} \qquad (I)$$

wherein
$R^1$ is a non-hydrophilic $C_{10-24}$ aliphatic group optionally comprising a cycloaliphatic group and optionally oxa- or thia-substituted;
Ph is para-phenylene;
$D^1$ is - NX -, - NH - NX - or - N(OX) -. where X is H or $C_{1-4}$ alkyl;
$R^2$ to $R^6$ are each independently H or $C_{1-4}$ alkyl;
n is any integer from 1 to 10;
$A^1$ is $NO_2$, CN or COOY where Y is H or $C_{1-4}$ alkyl; and
$A^2$ is H or independently as defined for $A^1$;
and salts thereof;
and a "second NLO compound" of the formula:

$$A^3-(CH_2)m-D^2-Ph-CR^7=CR^8(-CR^9=CR^{10})_p-CR^{11}=C\begin{matrix}COOR^{12}\\ A^4\end{matrix}$$

(II)

wherein
$A^3$ is independently as defined for $A^1$ in formula (I);
m is an integer from 1 to 4;
$D^2$ is independently as defined for $D^1$ in formula (I);
Ph is para-phenylene;
$R^7$ to $R^{11}$ are each independently H or $C_{1-4}$ alkyl;
p is any integer from 1 to 10;
$A^4$ is independently as defined for $A^2$ in formula (I); and
$R^{12}$ is independently as defined for $R^1$ in formula (I); and salts thereof;
which compounds each have an electronic vector, and in which monolayers the two compounds are arranged with their electronic vectors in the same sense.

The term "non-hydrophilic" herein means unsubstituted by hydrophilic substituents, such as carboxylate, sulphonate, phosphonate and hydroxyl.

### <u>The First NLO Compound</u>

In the first NLO compound it is preferred that $R^1$ is a long chain aliphatic group optionally containing a cycloaliphatic group, (but more preferably not), containing from 10 to 16, and more preferably from 12 to 16 carbon atoms. Minor variations in chain length within these preferred limits are believed to have little effect on the non-linear optical properties of the compound. It is also preferred that the aliphatic chain is

unbranched or, at most, contains only one or two branches, each containing only one or two carbon atoms.

Any cycloaliphatic group which is comprised in $R^1$ may suitably contain 5 to 12 carbon atoms, preferably 5 to 7.

$R^1$ may be substituted by one or more heteroatoms, especially oxygen or sulphur.

If $R^1$ is substituted by one or more heteroatoms, it is preferred that there is not more than one heteroatom for every twelve carbon atoms in the chain. The group represented by $R^1$ may carry non-hydrophilic substituents, such as halogen atoms, but is preferably a hydrocarbon.

Examples of the group represented by $R^1$ are decyl, hendecyl, dodecyl (lauryl), heptadecyl (margaryl), octadecyl (stearyl), nonadecyl, eicosanyl (arachidyl), heneicosanyl, docosanyl (behenyl), tricosanyl, tetracosanyl (lignoceryl).

Other examples of the group represented by $R^1$ are 10-eicosanyl 9,12-octadecadienyl (linoleyl) and 6-hexyloxyhexyl.

Preferred $D^1$ include - NX-as defined, and X is preferably H or methyl.

Preferred $R^1$ - $D^1$ - include N-methyl-N-decylamino and N-methyl-N-dodecylamino.

$R^2$ to $R^6$ are preferably each independently H or methyl. More preferably $R^2$ and $R^6$ are each methyl and the remainder are H. The two methyl groups are then preferably mutually trans.

It is preferred that n is 1 to 4.

$A^2$ is preferably other than H. Within $A^1$ or $A^2$ when COOY as defined, where Y is $C_{1-4}$ alkyl, it is preferably methyl, but Y is preferably H. Preferred values for $A^1$ and $A^2$ include carboxyl and CN; the combination of these two is particularly preferred. Salts of the compound of formula (I) may be salts of a carboxyl group, including metal salts or salts in which the cation contains a tetravalent nitrogen atom, and/or acid addition salts of a basic nitrogen atom.

Where any salt cation is a metal, it is preferably divalent. Preferred metals are cadmium, barium, lead and calcium.

Other suitable salt cation metals include manganese, zinc, magnesium and strontium.

Where any salt cation is one containing a tetravalent nitrogen atom this may be ammonium, such as $NH_4$, mono-, di- or tri-substituted or quaternary ammonium.

Other suitable salt cations containing a tetravalent nitrogen atom include bis(ammonium), such as alkylene- and alkenylene- diammonium, guanidinium, biguanidinium and amidinium.

The tetravalent N atom in such a cation may carry substitutents other than hydrogen and suitable substituents include alkyl, such as methyl, ethyl, lauryl, cetyl, stearyl, aryl, such as phenyl, aralkyl, such as benzyl, and cycloalkyl, such as cyclohexyl, which may themselves be substituted by such as $C_{1-4}$-alkyl, e.g. tolyl, $C_{1-4}$-alkoxy, e.g. anisyl and ethoxyethyl, halogen, e.g. chlorophenyl and hydroxy, e.g. hydroxethyl. Specific examples of suitable groups are $NH_4$, $N(CH_3)^4$, $N(C_2H_4OH)_4$, $N(CH_3)_3(C_{18}H_{37})$, $H_3N$-$C_2H_4$-$NH_3$.

Where a salt is an acid addition salt it may be a hydrogen halide, sulphate, organylsulphonate or phosphate.

Specific examples of the first NLO compound include 1-(4-N-methyl-N-dodecylaminophenyl)-3,8-dimethyl-10-carboxyl-10-cyanodeca-1,3,5,7,9- pentaene, and the calcium and cadmium salts thereof.

Other specific examples of the first NLO compound also include:

1-(4-N-methyl-N-dodecylaminophenyl)-3-methyl-8-carboxyocta-1,3,5,7-tetraene (2),
1-(4-N-methyl-N-dodecylaminophenyl)-3,8-dimethyl-10-nitrodeca-1,3,5,7,9-pentaene (3),
1-(4-N-methyl-N-decylaminophenyl)-6-cyanohexa-1,3,5triene,
1-(4-N-methyl-N-dodecylaminophenyl)-6-carboxy-6-cyanohexa-1,3,5-triene (4),
1-(4-N-methyl-N-decylaminophenyl)-6-cyanohexa-1,3,5-triene,
1-(4-N-methyl-N-tetracosanylaminophenyl)-6-carboxy-6-cyanohexa-1,3,5-triene,
1-(4-N-methyl-N-tetracosanylaminophenyl)-6-carboxy-6-nitrohexa-1,3,5-triene,
1-(4-N-methyl-N-4-dodecylcyclohexylaminophenyl)-20-carboxy-20-cyanoeicosa-1,3,5,7,9,11,13,15,17,19-decaene,
1-(4-N-methyl-N-4-dodecylcyclohexylaminophenyl)-6-carboxy-6-cyano-3,4-trans-dimethylhexa-1,3,5-triene,
1-(4-N-methyl-N-6-hexyloxyhexylaminophenyl)-3,8-dimethyl-10-methoxycarbonyldeca-1,3,5,7,9-pentaene,
1-(4-N-methyl-N-6-hexyloxyhexylaminophenyl)-3,8 -dimethyl10-cyanodeca-1,3,5,7,9-pentaene,
1-(4-N-methyl-N-dodecylaminophenyl)-3,8-dimethyl-10-methoxycarbonyldeca-1,3,5,7,9 pentaene,
1-(4-N-methyl-N-dodecylaminophenyl)-3,8-dimethyl-10-carboxydodeca-1,3,5,7,9,11-hexaene,
1-(4-N-methyl-N-dodecylaminophenyl)-3,8-dimethyl-10-carboxydeca-1,3,5,7,9-pentaene,
1-(4-N-methyl-N-dodecylaminophenyl)-3,8-dimethyl-10-carboxy-10-cyanodeca-1,3,5,7,9-pentaene (5)
1-(4-N-methyl-N-dodecylaminophenyl)-2,9-dimethyl-10-carboxy-10-cyanodeca-1,3,5,7,9-pentaene,
1-(4-N-methyl-N-dodecylaminophenyl)-3,8-dimethyl-10,10-dicarboxydeca-1,3,5,7,9-pentaene,

1-(4-N-methyl-N-dodecylaminophenyl)-3,8-dimethyl-10-carboxy-10-nitrodeca-1,3,5,7,9-pentaene,
1-(4-N-methyl-N-dodecylaminophenyl)-3-propyl-8-methyl-10-carboxy-10-cyanodeca-1,3,5,7,9-pentaene, and
1-(4-N-methyl-N-dodecylaminophenyl)-1,3,8-trimethyl-10-carboxy-10-cyanodeca-1,3,5,7,9-pentaene,
and salts thereof.

The first NLO compound is non-centrosymmetric and substantially polarised along its longitudinal axis because the $A^1$ and optionally $A^2$ group(s) are each electron-withdrawing and the $R^1$-$D^1$-group is electron-donating.

A molecule of the compound may thus be represented as an electronic vector directed along this axis from the $R^1$-$D^1$ group towards the $A^1$ and optionally $A^2$ group(s).

The first NLO compound may be prepared by forming a C-C bond between a precursor of the $R^1$-D-PL-$CR^2$ moiety and a precursor of the remainder of the molecule of formula (I), for example by a Wittig reaction or any conventional reaction for C-C bond formation.

It will be appreciated by the skilled man that some of the groups $D^1$, $A^1$ and $A^2$ may give rise to unwanted side reactions. Such groups may be protected during the reaction by a conventional removable protecting group, which is removed from the reaction product conventionally once it has served its purpose. Alternatively, the precursor may contain a precursor of the final desired group which will be converted into that desired group in the reaction product. Thus, e.g. $D^1$ = NH may be protected by a conventional N-protecting group, and for $A^1$ or $A^3$ = COOH the relevant precursor may contain an aldehyde precursor of that COOH group.

Compounds of the formula (I) may be salified conventionally or any carboxyl group esterified conventionally.

## The Second NLO Compound

In the second NLO compound, $A^3$ when COOY as defined for (but independently of) $A^1$ in the first NLO compound of formula (I), is especially preferred. Where Y is $C_{1-4}$ alkyl it is preferably methyl, but Y is preferably H.

m may often be 2.

Preferred $D^2$ include - NX - as defined for (but independently of) $D^1$ in formula (I), and X is preferably H or methyl.

Preferred $A^3$ - $(CH_2)_m$ - $D^2$ - include N-2-carboxyethyl-N-methylamino and N-4-carboxybutyl -N-methylamino.

$R^7$ to $R^{11}$ are preferably each independently H or methyl. More preferably $R^7$ and $R^{11}$ are each methyl and the remainder are H. The two methyl groups are then preferably mutually trans.

It is preferred that p is 1 to 4.

$A^4$ is preferably other than H. Preferred values for $A^3$ and $A^4$ include carboxyl and CN, in particular CN.

It is preferred that $R^{12}$ independently is a long chain aliphatic group of the type and containing the same components and the same number of carbon atoms as the group described hereinbefore as preferred for $R^1$ in formula (I).

The combination of the preferred values for $A^4$ and $R^{12}$ is particularly preferred.

Salts of the second NLO compound of formula (II) may be salts of a carboxyl group, including metal salts or salts in which the cation contains a tetravalent nigrogen atom, and/or acid addition salts of a basic nitrogen atom.

Suitable and preferred salts are as so described for salts of the first NLO compound of formula (I).

Specific examples of the second NLO compound include 1-(4-N-methyl-N-2-carboxyethylaminophenyl)-3,8-dimethyl-10-dodecyloxycarbonyl-10-cyanodeca1,3,5,7,9-pentaene and the calcium and cadmium salts thereof.

Other specific examples of the second NLO compound also include:
1-(4-N-methyl-N-2-carboxyethylaminophenyl)-3-methyl-8-decyloxycarbonyl-octa-1,3,5,7-tetraene,
1-(4-N-methyl-N-2-carboxyethylaminophenyl)-3,8-dimethyl-10-dodecyloxycarbonyl-10-nitrodeca-1,3,5,7,9-pentaene,
1-(4-N-methyl-N-carboxymethylaminophenyl)-6-cyanohexa-1,3,5-triene,
1-(4-N-methyl-N-2-carboxyethylaminophenyl)-6-decyloxycarbonyl-6-cyano-hexa-1,3,5-triene,
1-(4-N-methyl-N-carboxymethylaminophenyl)-6-cyanohexa-1,3,5-triene,
1-(4-N-methyl-N-4-carboxybutylaminophenyl)-6-dodecyloxycarbonyl-6-cyanohexa-1,3,5 triene,
1-(4-N-methyl-N-4-carboxybutylaminophenyl)-6-dodecyloxycarbonyl-6-nitro-hexa-1,3,5-triene,
1-(4-N-methyl-N-4-2-cyanoethylaminophenyl)-20-tetracosanyloxycarbonyl-20-cyanoeicosa-1,3,5,7,9,11,13

15,17,19-decaene,
1-(4-N-methyl-N-4-2-cyanoethylaminophenyl)-6-tetracosanyloxycarbonyl-6-cyano-3,4-trans-dimethylhexa1,3,5-triene,
1-(4-N-methyl-N-2-nitroethylaminophenyl)-3,8-dimethyl10-dodecyloxycarbonyl-10-methoxycarbonyldeca-1,3,5,7,9-pentaene,
1-(4-N-methyl-N-2-nitroethylaminophenyl)-3,8-dimethyl-10-dodecyloxycarbonyl-10-cyanodeca-1,3,5,7,9-pentaene,
1-(4-N-methyl-N-2-carboxyethylaminophenyl)-3,8-dimethyl-10-dodecyloxycarbonyl-10-methoxycarbonyldeca-1,3,5,7,9-pentaene,
1-(4-N-methyl-N-2-carboxyethylaminophenyl)-3,8-dimethyl-10-dodecyloxycarbonyldodeca-1,3,5,7,9,11-hexaene,
1-(4-N-methyl-N-2-carboxyethylaminophenyl)-3,8-dimethyl-10-dodecyloxycarbonyldeca-1,3,5,7,9-pentaene,
1-(4-N-methyl-N-2-carboxyethylaminophenyl)-3,8-dimethyl-10-dodecyloxycarbonyl-10-cyanodeca-1,3,5,7,9-pentaene,
1-(4-N-methyl-N-2-carboxyethylaminophenyl)-2,9-dimethyl-10-dodecyloxycarbonyl-10-cyanodeca-1,3,5,7,9-pentaene,
1-(4-N-methyl-N-2-carboxyethylaminophenyl)-3,8-dimethyl-10-methoxycarbonyl-10-dodecyloxycarbonyldeca1,3,5,7,9-pentaene,
1-(4-N-methyl-N-2-carboxyethylaminophenyl)-3,8-dimethyl-10-dodecyloxycarbonyl-10-nitrodeca-1,3,5,7,9-pentaene,
1-(4-N-methyl-N-2-carboxyethylaminophenyl)-3-propyl-8-methyl-10-dodecyloxycarbonyl-10-cyanodeca-1,3,5,7,9-pentaene, and
1-(4-N-methyl-N-2-carboxyethylaminophenyl)-1,3,8-trimethyl-10-dodecyloxycarbonyl-10-cyanodeca-1,3,5,7,9-pentaene,
and salts thereof.

The second NLO compound is non-centrosymmetric and substantially polarised along its longitudinal axis, because the carboxylate group is electron-withdrawing and the substituted amino group is electron-donating. A molecule of the compound can therefore be represented as an electronic vector directed along this axis from the substituted amino group towards the carboxylate group.

The second NLO compound may be prepared exactly analogously to the first (as described hereinbefore) and subject to the same provisos and options.

## The NLO Element

The inherent properties of the first and second NLO compounds cause them to be aligned in the same manner in the alternating monolayers of the NLO coating.

This means that the vectors along the longitudinal axes of the molecules are substantially parallel and in the same sense.

In the NLO coating, the long chain aliphatic group ($R^1$) in the first NLO compound will be adjacent to the long-chain aliphatic group ($R^{12}$) in the second NLO compound such that both these compounds' electronic vectors lie in the same direction. The overall effect will be that the NLO coating is noncentrosymmetric along an axis perpendicular to its plane.

In an especially preferred species of the NLO element the NLO coating comprises alternating layers of the NLO compounds: 1-(4-N-methyl-N-dodecylaminophenyl) -3,8-dimethyl-10-carboxyl-10-cyanodeca-1,3,5,7,9-pentaene (Compound I) and 1-(4-N-methyl-N-2-carboxyethylaminophenyl)-3,8-dimethyl-10-cyano-10-dodecyloxycarbonyl-deca-1,3,5,7,9-pentaene (Compound II), each independently in the free acid form or as the cadmium or calcium salt or methyl ester thereof.

Where the substrate is transparent at the wavelength of light to be used it may be in the form of an optical waveguide carrying on the outer surface a coating of alternating monolayers of the first and second NLO compounds.

With this form of element an optical signal passing along the waveguide interacts with the superficial NLO coating, via the evanescent wave which extends into this coating, and gives rise to non-linear optical effects.

Examples of suitable substances for a substrate in the form of a waveguide are glass, lithium niobate and silicon nitride on oxidised silicon.

Alternatively, a transparent substrate may be in the form of a plate or disc, on one surface, or both surfaces of which the present NLO coating may be formed. With this form of element a non-linear optical

effect may be obtained by transverse illumination of the substrate and coating(s). Suitable substrates for such an optical element include glass, and poly(methyl methacrylate) (PMMA).

Where the substrate is reflecting it conveniently has a plane reflecting surface on which the present NLO coating may be formed so that the optical signal passes through the coating immediately before and after contact with the reflecting surface. Examples of suitable materials for the reflecting substrate are aluminium, silver, or aluminium or silver films deposited on a support substrate such as glass, silica, quartz or poly(methyl methacrylate). With this form of optical element it is possible to attain efficient non-linear processes by exciting the so called "surface plasmon" modes reported in the literature [Stegman et at. Appl. Phys. Lett. 41 (10) 906, 1982; Sand et al Appl. Optics 21 (22) 3993, 1982].

The present optical element can be prepared by a Langmuir-Blodgett technique.

According to a second aspect of the invention there is provided a method for the preparation of an optical element having non-linear optical properties which comprises passing a surface of a transparent or reflecting substrate into a liquid through a first surface carrying a superficial monomolecular layer of the first NLO compound and out of the liquid through a second surface carrying a superficial layer of the second NLO compound.

The preparative process may of course be carried out vice versa.

The liquid, hereinafter referred to as 'the sub-phase', is preferably an aqueous medium. The monomolecular layer or layers on the substrate are obtained in the normal manner by adjustment of the surface area with movable dams in a Langmuir trough.

The optical element of the first aspect of the invention in various forms is capable of producing second order non-linear optical effects in a number of ways in various optical devices.

According to a third aspect of the present invention there is provided an optical device comprising an NLO element of the present invention.

An optical device in accordance with the present invention, in which the optical element comprises a substrate in the form of a transparent waveguide having an intimate coating formed by multiple alternating monolayers of the first and the second NLO compounds consists of an oxidised silicon plate having a first superficial (lower) coating of silicon nitride to form a superficial plane waveguide and a second superficial (upper) NLO coating comprising alternating monolayers of the first and second NLO compound.

In operation, a first optical signal is passed through the waveguide (in the plane of the waveguide).

The first optical signal interacts with the NLO coating, by way of the evanescent wave which extends into this coating. This interaction generates a second optical signal, at the second harmonic frequency with respect to the first optical signal, which can be detected in the combined optical signal leaving the waveguide.

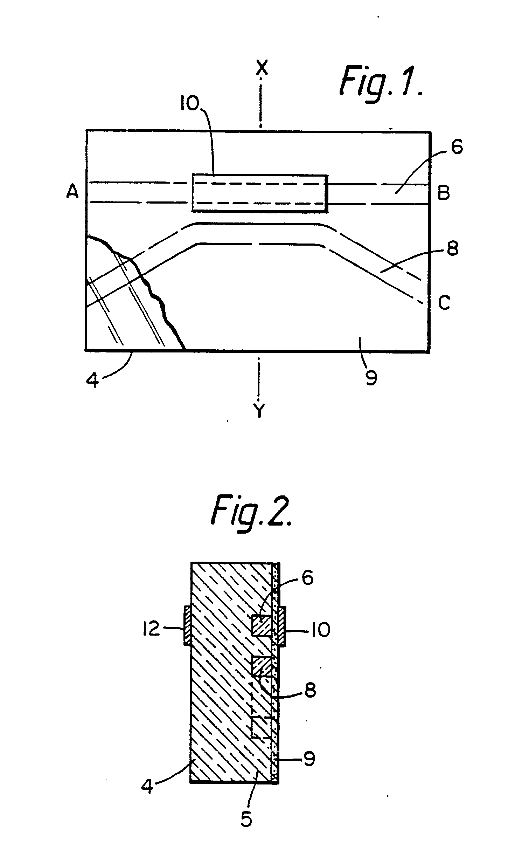

Another device in accordance with the present invention is described in relation to Figures 1 & 2 of the accompanying drawings.

In the drawings, Figure 1 is a plan view and Figure 2 is a cross-section on the line X-Y in Figure 1.

In the device the optical element comprises a glass substrate 4, in the upper surface region 5 of which are two transparent stripe waveguides 6 & 8.

These stripe waveguides 6 & 8 are formed in the desired pattern by the well known ion exchange or ion bombardment techniques, and are positioned to run closely parallel (ie separated by a distance of a few micrometres (typically 2-5$\mu$m)) over the central part of their length.

The surface of the substrate 4 is covered with an NLO coating 9 of alternating monolayers of the first and second NLO compounds. A pair of electrodes 10 & 12, connected to a power source (not shown) is arranged with one electrode 10 above and the other 12 below one of the stripe waveguide 6. In operation an optical signal is passed through the first waveguide 6 from A to B and a voltage is applied across the electrodes. This alters the refractive index of the NLO coating, due to the d.c. electro-optic (Pockels) effect, and thus the propagation constant of the first waveguide 6.

By suitable adjustment of the applied voltage the propagation constant of the first waveguide 6 can be arranged so that the optical signal passing through this waveguide 6 is coupled into the second waveguide 8 and produces a second optical signal emerging from the device at C.

The optical element of the second aspect of the present invention may be used in other known forms of optical device incorporating an optical element by replacing the NLO coating used therein, e.g. lithium niobate, with the present NLO coating.

The invention is further illustrated by the following Preparations and Examples in which all parts and percentages are by weight unless otherwise indicated.

Preparation of First NLO Compound (Compound I)

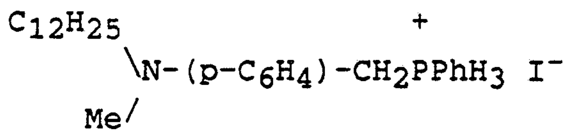

(a)

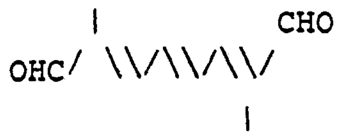

(b)

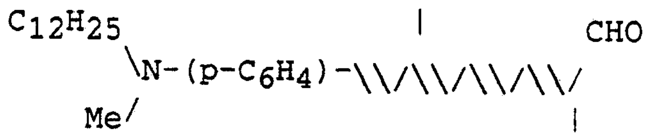

(c)

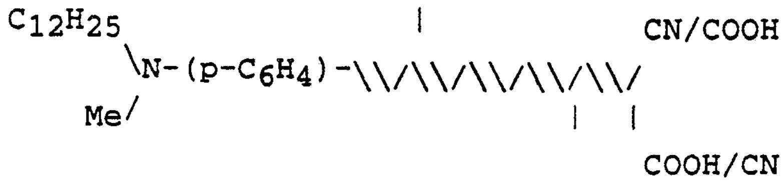

(I)

4-(N-methyl-N-laurylamino)benzyltriphenylphosphonium iodide (Compound a) was prepared by stirring together N-methyl-N-laurylaniline (110g), 40% aqueous formalin (30g), triphenylphosphine (104.8g), potassium iodide (66.4g), water (8 ml), glacial acetic acid (80g) and chloroform (300ml) at 20-25°C for 5 weeks. The solution was then washed in water and evaporated to give an oil, which was slurried in ether to form a precipitate of Compound a (yield 298g), 76.8% of theory). Octa-2,4,6-triene-2,7-dial (Compound b) was prepared by stirring 2-oxopropanal dimethyl acetal (117 ml) and toluene (300ml) together at 50°C, and adding 80% sodium hydride in oil (28.4g) portionwise over 30 mins. The mixture was then kept at 50°C for 1 hour, then at 60°C for 1 hour, and was then acidified with 2N sulphuric acid.

The toluene layer was separated, washed with water and allowed to stand at 20°C. A precipitate of Compound b then formed.

Compounds a and b were then stirred together in dimethyl formamide (100ml) at 20-25°C whilst sodium methoxide (0.5g sodium in 150ml of methanol) was added dropwise until the ratio of starting material to product failed to decrease. After stirring for a further 1 hour the mixture was diluted with water (200ml) and extracted with toluene.

The organic extract was dried, dissolved in chloroform and eluted on silica gel with toluene to give Compound c. Compound c was then stirred together with acetamide, ammonium acetate, cyano acetic acid, glacial acetic acid and hexane for 4 hours at 60-65°C under reflux conditions. After cooling to 20°C the solid was filtered off, extracted with hot chloroform, washed with water and dried. The product was eluted on silica gel with toluene.

A slow running fraction was taken from the column and extracted in ethanol. Evaporation of the solvent gave 0.22g of Compound I (22% yield).

Compounds (2) to (5) hereinbefore were prepared analogously.

The remaining specific examples of first NLO compounds named hereinbefore are also prepared analogously.

Preparation of Second NLO Compound (Compound II)

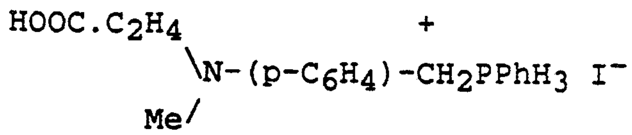

(d)

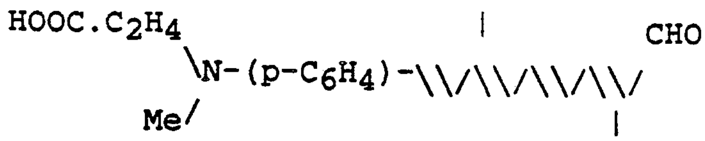

(e)

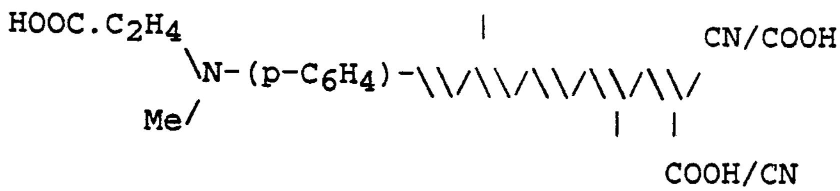

(II)

4-(N-2-carboxyethyl)-N-methylamino)benzyltriphenylphosphonium iodide (Compound d) was prepared by stirring a mixture of N-(2-carboxyethyl)-N-methylaniline (25.06g; 0.14m), 40% aqueous formaldehyde (10.5g; 0.14m), triphenylphosphine (36.68g; 0.14m), potassium iodide (23.24g; 0.14m), acetic acid (27ml) and chloroform (100ml) at room temperature for 15 days. The resultant mixture was drowned into ether giving an oily residue which was treated with ether to gain a white solid.

The aldehyde (Compound e) was prepared by adding IM ethanolic sodium ethoxide solution (14ml;0.014M) to a stirred suspension of octa-2,4,6-triene-2,7-dial (Compound b, 1.15g; 0.007M) and Compound d (4.1g; 0.007M) in dimethyl formamide (50ml). Reaction was instantaneous giving an orange solution which was stirred at room temperature for 1 hour. The solution was drowned into water (200ml) and acidified with hydrochloric acid.

Acidification gave an orange tarry precipitate, which was extracted into dichloromethane. The extract was water washed, dried over magnesium sulphate, evaporated to dryness under reduced pressure and then purified by flash chromatography (silica/dichloromethane).

Piperidine (2ml) was then added to a mixture of n-dodecyl cyanoacetate (1.27g; 0.005M) and Compound e (1.7g; 0.005M). The mixture changed colour from dark orange to violet.

The mixture was drowned into water, acidified with hydrochloric acid and extracted into dichloromethane. The extract was water washed and dried over magnesium sulphate. After evaporation to dryness under reduced pressure the oily product was published by flash chromatography (silica/ether (4) ethanol (1)) to give a dark violet solid (Compound II, 06.2g; 7% theory).

MPt: 109-111 °C
(ethanol): 525nm
lambda max (ethanol): 525nm
Mass spectrum: M/Z 574 ($M^+$)

The remaining specific examples of second NLO compounds named hereinbefore are also prepared analogously.

EXAMPLE 1

Deposition & Characterisation of NLO Layers

The surface of an aqueous subphase comprising a solution of 1.0mM solution of calcium acetate in

water at pH 6.5 in a Langmuir trough was divided by means of a flexible PTFE floating barrier containing a leaf spring valve.

The leaf spring valve permitted a plane glass plate to be moved through the floating barrier while partially immersed in the subphase, without contact between the superficial layers in either side of the floating barrier.

In this manner the plate could be passed into the subphase on one side of the barrier and withdrawn from the subphase on the other side of the barrier.

The flexibility of the floating barrier allowed the maintenance of equal surface pressures on both sides thereof.

A superficial layer of "the first NLO compound" (Compound I above) was prepared by slowly dripping a 1.0,M solution of Compound I in chloroform from a microsyringe onto the surface of the subphase on the first side (side 1) of the floating barrier. A similar procedure was carried out for "the second NLO compound" (Compound II above) on the second side (side 2) of the barrier.

The solvent from each solution was permitted to evaporate and the surface pressure on both sides of the floating barrier was adjusted to 26nN/m, by movement of the adjustable barrier in the trough, and maintained at 26mN/m throughout the dipping process.

A thin glass plate, pre-cleaned by ultrasonic washing in chloroform and methanol, soaked in sodium hydroxide for 24 hours and dried, was rendered hydrophobic by exposure to hexamethyldisilazane vapour for 24 hours.

The plate was then dipped into the subphase on side 1 of the trough at a rate of 1cm/min, during which a monomolecular layer of compound I was deposited in the hydrophobic mode. While immersed in the subphase, the plate was then moved through the leaf-spring valve from side 1 to side 2 of the floating barrier.

The slide was then withdrawn from side 2 of the trough at 1.0 cm/min, during which a monomolecular layer of Compound IV was deposited , in hydrophilic mode, on top of the layer of compound I. The cycle of insertion into side 1, movement through the leaf-spring valve and withdrawal from side 2 was repeated.

This repeated operation built up thicker coatings of alternating monolayers of Compounds I and II on all surfaces of the plate which had been passed into the subphase.

Substantially all the molecules of Compounds I and II in the coating were aligned in a parallel array, with their vectors in the same sense and their nonlinear optical coefficients being additive.

The resulting optical elements (hereinafter referred to as "OA1" and "OA2") comprised a glass substrate covered on both plane surfaces with an NLO coating comprising 2 and 8 alternating monolayers of Compound I and Compound II respectively.

Optical elements comprising alternating layers of any two of the other specific examples of first and second NLO compounds named hereinbefore are also prepared analogously.

EXAMPLE 2

The optical elements described in Example 1 were used in the following manner to demonstrate their NLO properties.

A beam of radiation from a Nd:YAG pulsed laser (wavelength 1,064nm; pulse duration 10 nsec; repetition rate 10 Hz) was passed transversely through the plate and NLO coatings.

The intensity of the radiation at the second harmonic (wavelength 532 nm) generated during passage through the element, after filtering our the transmitted radiation at the fundamental wavelength (1,064 nm) was detected with a phototmultiplier. After calibration against the second harmonic generated by a 2mm quartz reference plate, the calculated values of the second order NLO coefficient, Khi$(^2)$ were 1.5 x $10^{-20}$ $C^3J^{-2}$ for OA1 and 4.4 x $10^{-21}$ $C^3J^{-2}$ for OA2. The average molecular second-order electronic polarisabilities at the wavelength 1.064µm were estimated from Khi $(^2)$ as 5.6 x $10^{-48}$ $C^3J\equiv 2u^{-2}m^3$ [1.5 x $10^{-27}$, $cm^5$ esu) for OA1 and 1.7 x $10^{-48}$, $C^3J^{-2}m^3$, (4.5 x $10^{-28}$ $cm^5$/esu) for OA2. The difference between these values will largely be due to a decrease on the degree of alignment of the molecules in the thicker film.

**Claims**

1. An optical element having non-linear optical properties comprising a transparent or reflecting substrate having at least a partial superficial coating comprising alternating monolayers of two compounds, a "first NLO compound" of the formula:

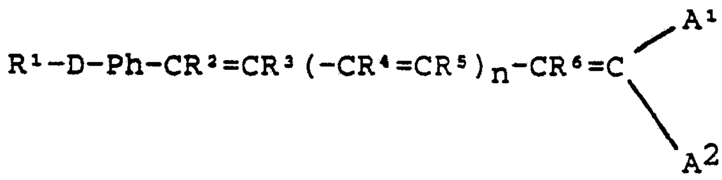

(I)

wherein
$R^1$ is a non-hydrophilic $C_{10-24}$ aliphatic group optionally comprising a cycloaliphatic group and optionally oxa- or thia-substituted;
$D^1$ is - NX -, - NH - NX - or - N(OX) -. where X is H or $C_{1-4}$ alkyl;
Ph is para-phenylene;
$R^2$ to $R^6$ are each independently H or $C_{1-4}$ alkyl;
n is any integer from 1 to 10;
$A^1$ is $NO_2$, CN or COOY where Y is H or $C_{1-4}$ alkyl; and
$A^2$ is H or independently as defined for $A^1$;
and salts thereof,
and a "second NLO compound" of the formula:

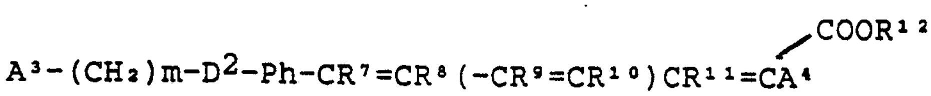

(II)

wherein
$A^3$ is independently as defined for $A^1$ in formula (I);
m is an integer from 1 to 4;
$D^2$ is independently as defined for $D^1$ in formula (I);
Ph is para-phenylene;
$R^7$ to $R^{11}$ are each independently H or $C_{1-4}$ alkyd;
p is any integer from 1 to 10;
$A^4$ is independently as defined for $A^2$ in formula (I); and
$R^{12}$ is independently as defined for R1 in formula (I);
and salts thereof;
which compounds each have an electronic vector, and in which monolayers the two compounds are arranged with their electronic vectors in the same sense.

2. An optical element according to claim 1, comprising a transparent or reflecting substrate having a surface with a coating comprising alternating layers of 1-(4-N-methyl-N-dodecylaminophenyl)-3,8-dimethyl-10-carboxyl-10-cyanodeca-1,3,5,7,9-pentaene ('Compound I') and 1-(4-N-methyl-N-2-carboxyethylaminophenyl)-3,8dimethyl-10-cyano10-dodecycloxy carbonyl-deca-1,3,5,7,9-pentaene ('Compound II'), each independently in the free acid form or as the cadmium or calcium salt or methyl ester thereof, with substantially all the molecules of Compounds I and II in the coating aligned in a parallel array, with their vectors in the same sense.

3. An optical element according to claim 2, comprising a transparent substrate and wherein the layers are monolayers.

4. An optical element according to claim 2, comprising a reflecting substrate and wherein the layers are thicker than monolayers.

5. A method for the preparation of an optical element according to claim 1, which comprises passing a surface of a transparent or reflecting substrate into a liquid sub-phase through a first surface of the liquid carrying a superficial monomolecular layer of the first NLO compound and out of the liquid through a second surface of the liquid carrying a superficial layer of the second NLO compound, or vice versa.

6. A method according to claim 5, wherein the liquid sub-phase is an aqueous medium in a Langmuir trough, and the monomolecular layer or layers are obtained by adjustment of the surface area with movable dams.

7. An optical device comprising a non-linear optical element according to claim 1.

8. An optical device according to claim, in which the optical element is an element according to claim 2.

9. A compound of formula (II) as defined in claim 1.

10. A compound according to claim 9 which is 1-(4-N-methyl-N-2-carboxyethylaminophenyl)-3,8-diethyl-10-dodecyloxycarbonyl-10-cyanodeca1,3,5, 7,9-pentaene or the calcium or cadmium salt thereof.

Fig.1.

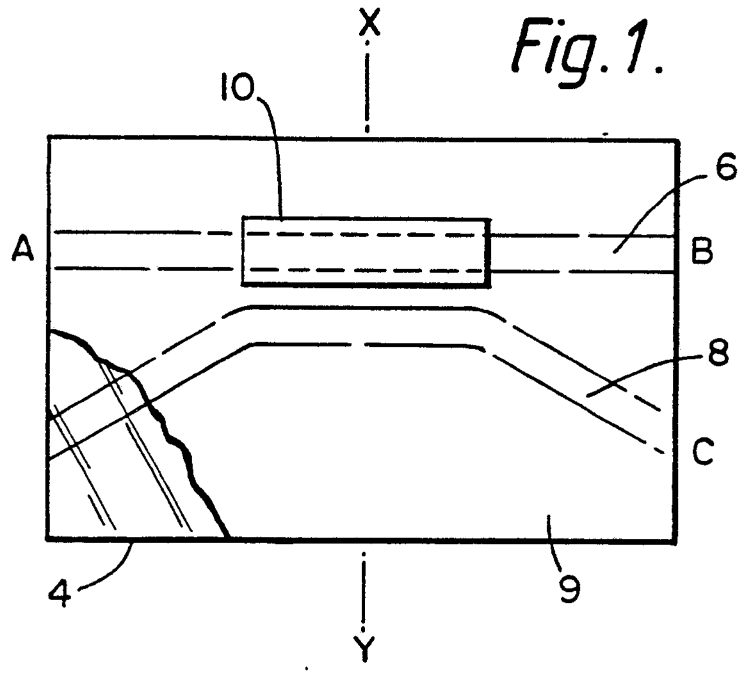


Fig.2.